# EUROPEAN PATENT APPLICATION

(11) **EP 4 668 432 A1**
(43) Date of publication of application: **24.12.2025**
(21) Application number: 24183332.6
(22) Date of filing: 20.06.2024
(51) Int. Cl.: H01M 50/209, H01M 50/249, H01M 50/271, H01M 50/30, H01M 50/358, H01M 50/367

(54) **BATTERY PACK ASSEMBLY AND VEHICLE BATTERY**

(71) Applicant: Ioncor Oy, 23500 Uusikaupunki (FI)
(72) Inventor: Kopra, Lasse, 23500 Uusikaupunki (FI); Hietakangas, Janne, 23500 Uusikaupunki (FI); Maksimainen, Aki, 23500 Uusikaupunki (FI)
(74) Representative: Papula Oy

(57) **Abstract**

A battery pack assembly (100) and a vehicle battery. The assembly comprises battery cells (1) comprising cell degassing elements (6). The battery pack assembly (100) further comprises a safety arrangement (2), comprising a cavity (3) provided between a proximal wall (4) and a distal wall (5). The proximal wall (4) is arranged proximate to the plurality of battery cells (1), and the distal wall (5) is arranged distal to the plurality of battery cells (1). The cavity (3) is configured to communicate with the cell degassing elements (6) through said proximal wall (4). The safety arrangement (2) further comprises an exit unit (7) connected in fluid communication with the cavity (3) by a port (8), the degassing unit (7) comprising a vent (9) leading out from the safety arrangement (2). The exit unit (7) is arranged on a second side (14) of the plurality of battery cells (1), said second side (14) being arranged at least substantially orthogonally to the proximal wall (4) of the cavity.

## Description

### BACKGROUND

The invention relates to a battery pack assembly, comprising a plurality of battery cells.

The invention further relates to a vehicle battery.

A battery cell can go into internal electrical short circuit and thermal runaway due to a defect of the battery cell or by mechanical, thermal or electrical abuse, for example. In such a case the pressure inside the battery cell will rise, and consequently a dedicated safety vent structure will rupture and release the internal pressure from the battery cell. Combination of high temperature gas, jet fire and ejecta particles including e.g. carbon, molten aluminium, pieces of copper and burned separator material, and e.g. electrolyte may burst out of the battery cell with a rapid speed (exceeding many times the speed of sound). This thermal runaway event is exothermic one and cannot be reversed or stopped, but propagation to other neighbouring battery cells should be prevented. The risk of explosion, structure rupture, fire, etc. will dramatically increase if further release of energy through cell-to-cell propagation happens. Structures and solutions for managing the thermal runaway are known, but there is still room for improvements.

### BRIEF DESCRIPTION

Viewed from a first aspect, there can be provided a battery pack assembly, comprising a plurality of battery cells, the battery cell comprising a cell degassing element, wherein the cell degassing elements of said plurality of battery cells being arranged on a same first side thereof, and the battery pack assembly further comprising a safety arrangement comprising a cavity arranged on said first side of said plurality of battery cells and provided between a proximal wall and a distal wall, wherein the proximal wall is arranged proximate to the plurality of battery cells, and the distal wall is arranged distal to the plurality of battery cells, wherein the cavity is configured to communicate with the cell degassing elements through said proximal wall, wherein the safety arrangement further comprises an exit unit connected in fluid communication with the cavity by a port, the exit unit comprising a vent leading out from the safety arrangement, wherein the exit unit is arranged on a second side of the plurality of battery cells, said second side being arranged at least substantially orthogonally to the proximal wall of the cavity.

Thereby a battery pack assembly may be achieved, wherein the first stage the gas stream of the thermal runaway is cooled down and at least most of the particles therein captured in a cavity, and then in the second stage, flames, if any, are extinguished in an exit unit, and this all may be realized in a battery pack assembly having high volumetric energy density.

Viewed from a further aspect, there can be provided a vehicle battery, comprising the battery pack assembly of the first aspect.

Thereby a battery having high volumetric energy density and where the gas stream of the thermal runaway is first cooled down and at least most of the particles therein captured in a cavity, and then flames, if any, are extinguished in an exit unit, may be achieved.

The battery pack assembly and the battery are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Various embodiments of the first aspect may comprise at least one feature from the following paragraphs:
In one embodiment, the cross-sectional flow area of the cell degassing element is A, and the cross-sectional flow area of the port is selected in range of 2 x A to 5 x A, preferably in range of 2 x A to 4 x A, more preferably in range of 2 x A to 3 x A.

An advantage is that the gas stream is first forced to spread and circulate inside the cavity and thereby the gas may substantially cool down before it exits the cavity.

In one embodiment, the port has an oblong shape at the cavity, and the longitudinal direction of the oblong shape is preferably aligned at least substantially with said edge.

An advantage is that a port that reduces the volumetric energy density of the battery as little as possible may be achieved.

In one embodiment, the port is positioned in the proximal wall at proximity of an edge thereof and distally from the ends of said edge, the longitudinal direction of the oblong shape preferably aligned at least substantially with said edge.

An advantage is that the gas stream is first forced to spread and circulate inside the cavity and thereby the gas may substantially cool down before it exits the cavity.

In one embodiment, the port is positioned in a side/end wall of the cavity and distally from the ends of said side/end wall.

An advantage is that the height of the cavity may be utilized in the dimensions of the port, and thus volumetric energy density of the assembly may be optimized.

In one embodiment, the shape of the proximal wall follows the outer dimension of the first side of the plurality of battery cells.

An advantage is that a compact structure of the battery pack assembly may be achieved.

In one embodiment, the area of the proximal wall is larger than the area of the first side of the plurality of battery cells.

An advantage is that the ability of the cavity to cool down the gas may be enhanced.

In one embodiment, at least most of the cavity has a height selected in range of 10 mm at most, preferably 2 mm to 5 mm, more preferably 3 mm to 4 mm.

An advantage is that creating of turbulence of the gas stream flowing in the cavity may be promoted, even to an extent that a vortex is arising.

In one embodiment, the cross-sectional flow area of the opening is A1, said cross-sectional flow area A1 being dimensioned in relation to the height of the cavity such that an imaginary cylinder arranged on the opening and extending from said opening to the distal wall has a base the area of which corresponds to the opening and a side surface having an area A2, wherein A2 is larger than A1, preferably 1.3 x A1 or more.

An advantage is that clogging of the cavity and the opening due to a burst of ejecta particles exiting from the battery cell may be prevented.

In one embodiment, the opening is arranged at an end of a projection projecting away from the cavity, and the height of the side surface of the imaginary cylinder is sum of the height of the cavity and the height of the projection.

An advantage is that extra volume may be created to the area of the cavity most susceptible to clogging, i.e., to the surroundings of the opening.

In one embodiment, the distal wall is a part of an outer protective wall of the battery pack assembly.

An advantage is that the structure of the battery pack assembly may be simplified.

In one embodiment, the distal wall is arranged between the plurality of battery cells and an outer protective wall of the battery pack assembly.

An advantage is that the cavity may be well protected against external stresses by the outer protective wall.

In one embodiment, the cell degassing elements are arranged in an upper surface of the plurality of battery cells destined for arranging upwards, and the cavity is arranged on said upper surface.

An advantage is that the volumetric energy density of the battery may be optimized.

In one embodiment, the cell degassing elements are arranged in a bottom surface of the plurality of battery cells destined for arranging downwards, and the cavity is arranged under said bottom surface.

An advantage is that the volumetric energy density of the battery may be optimized.

In one embodiment, the assembly comprises a connecting piece arranged between the cell degassing element and the respective opening to link said cell degassing element to said opening, wherein the connecting piece comprises a connecting channel, preferably provided with a stopper structure allowing releasing the internal pressure from the battery cell undergoing thermal runaway to the cavity but prohibiting access of gas from the cavity to another battery cell.

An advantage is that a closed flow channel from the cell degassing element to the cavity may be provided without need for contacting the cell degassing element and the respective opening. Another advantage is that propagation of the thermal runaway to other battery cells may be prevented.

In one embodiment, the surface of the distal wall arranged towards the cavity is more even than the surface of the proximal wall arranged towards the cavity.

An advantage is that the gas flow in the cavity may then tend to stay attached to the surface of the distal wall due to the Coand 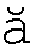 effect. As a result, the tendency of the gas to flow towards the openings and the cell degassing elements may be reduced.

In one embodiment, at least two battery pack assemblies are arranged one on top of one another, and at least one cavity is arranged between battery cells arranged one on top of one another.

An advantage is that the volumetric energy density of the battery may be optimized.

Based on the above mentioned, it should be noted that different embodiments mentioned in the above paragraphs may combined in any possible suitable manner for implementing the present invention.

### BRIEF DESCRIPTION OF FIGURES

Some embodiments illustrating the present disclosure are described in more detail in the attached drawings, in which
Figure 1a is a schematic exploded view of a battery pack assembly,
Figure 1b is a schematic perspective view of the battery pack assembly shown in Figure 1b in partial cross-section,
Figure 2a is a schematic view of a detail of a battery pack assembly,
Figure 2b is a schematic view of another detail of a battery pack assembly,
Figure 3a is a schematic side view of a third detail of a battery pack assembly in partial cross-section,
Figure 3b illustrates a detail of Figure 3a, and
Figure 4 is a schematic perspective view of another battery pack assembly.

In the figures, some embodiments are shown simplified for the sake of clarity. Similar parts are marked with the same reference numbers in the figures.

### DETAILED DESCRIPTION

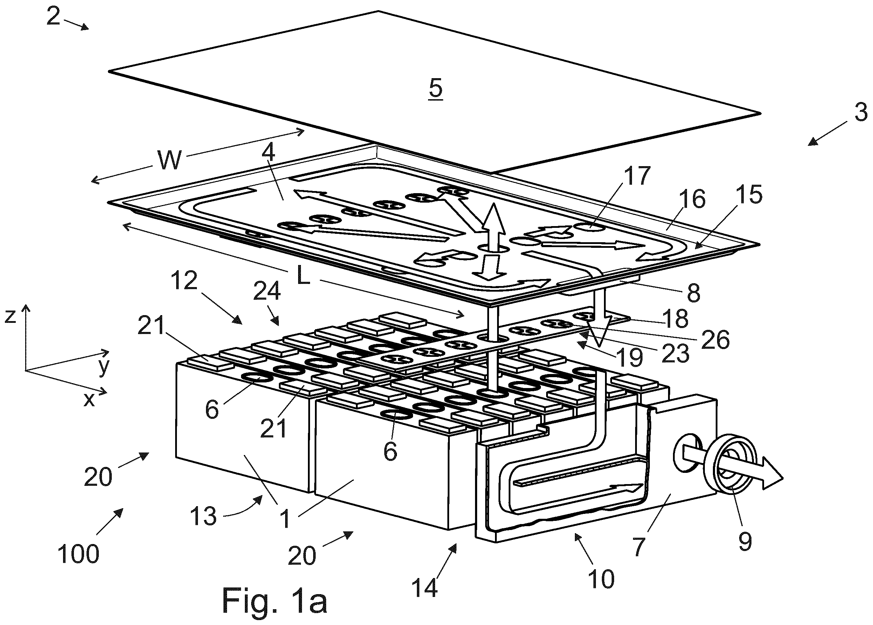

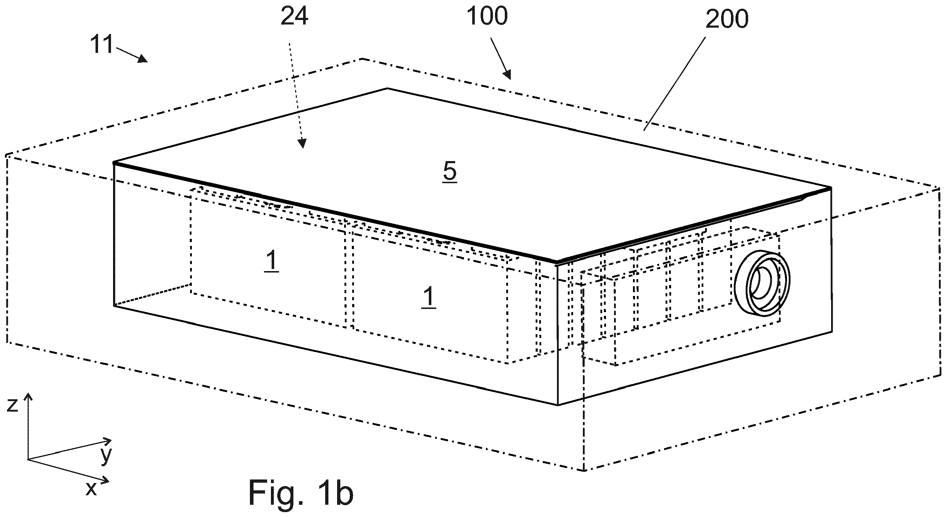

**Figure 1a** is a schematic exploded view of a battery pack assembly, and **Figure 1b** is a schematic perspective view of the battery pack assembly shown in Figure 1b in partial cross-section.

The battery pack assembly 100 is a part of a traction battery 200 of an electric-driven vehicle, such as a car, a truck or a mobile machinery. The traction battery 200 is shown schematically by dot-and-dash line in Figure 1b. The traction battery 200 may comprise just one battery pack assembly 100, but typically it comprises two or more said battery pack assemblies. One of the most important quantities of the battery pack assembly 100 and the battery 200 is their volumetric energy density that is a measure of the amount of energy that a battery can contain in comparison to its volume. The volumetric energy density is usually expressed in watthours per litre (Wh/l).

The battery pack assembly 100 comprises a plurality of battery cells 1 that are arranged in one or more cell groups or stacks 20 each of which comprises plurality of battery cells 1. In Figures 1a, 1b the battery pack assembly 100 comprises two cell stacks 20, each of which comprises seven (7) battery cells 1. The battery cells 1 shown in Figures 1a, 1b have a prismatic shape. In other embodiments the battery cells may have some another shape, such as a cylindrical shape. In one embodiment, the battery cell has a pouch design.

The battery cell 1 comprises a cell degassing element 6that is designed to release gas from the respective battery cell in the event of excess pressure therein. The cell degassing elements 6 of the battery cells 1 are arranged on a same first side of the battery cells. In other words, all the cell degassing elements 6 of the battery pack assembly 100 are arranged on same side of the cell stacks 20.

In one embodiment, such as shown in Figures 1a, 1b, the cell degassing element 6 is arranged on same side of the cell with its battery terminals 21. In other embodiments, the cell degassing element 6 lies not on same side with the battery terminals 21, but, for instance, on an opposite side thereof.

The battery pack assembly 100 further comprises a safety arrangement 2 that comprises a cavity 3 and an exit unit 7 arranged in fluid communication with said cavity 3. The cavity 3 is arranged on the first side 24 of the plurality of battery cells, i.e., on the side where the cell degassing elements 6 lies.

In one embodiment, such as shown in Figures 1a, 1b, the cell degassing elements 6 are arranged on an upper surface 12 of the battery cells and thus the first side 24 is the upper surface 12. The upper surface 12 is destined for arranging upwards in the battery 200. Thus, the cavity 3 is arranged on or above the upper surface 12 of the battery cells.

In another embodiment, the cell degassing elements 6 are arranged in a bottom surface 13 of the battery cells 1, i.e., the cell degassing elements 6 are directed downwards in the battery 200. Thus, the first side 24 of the plurality of battery cells is below or underside the battery cells and the cavity 3 is arranged below said bottom surface 13.

The cavity is provided or established between a proximal wall 4 and a distal wall 5. The proximal wall 4 is arranged proximate or closer to the battery cells 1, and the distal wall 5 is arranged distal to or farer from the battery cells 1. The proximal wall 4 is in connection with the distal wall 5 through side and end walls 16. In one embodiment, the side and the end wall 16 is a distinct element, but in some embodiments it is a bent or curved part or section of the proximal wall 4 and/or the distal wall 5.

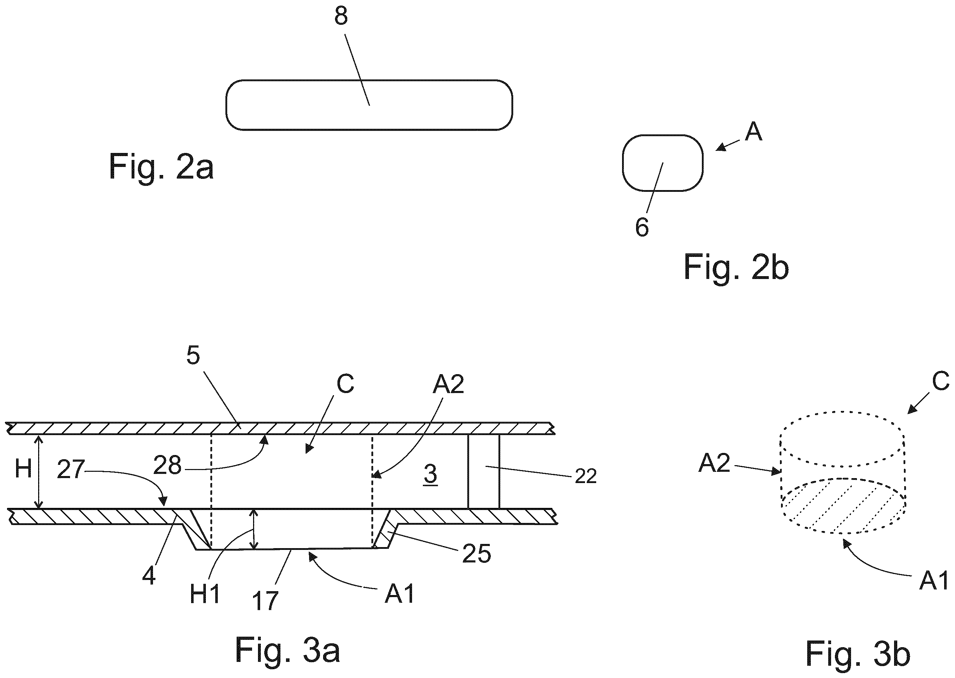

The cavity 3 is configured to communicate with the cell degassing elements 6 through the proximal wall 4. For this purpose, the proximal wall 4 comprises openings 17 that match with the cell degassing elements 6. In one embodiment, the opening 17 is in direct contact with the respective cell degassing element 6. In this embodiment, the opening 17 may comprise an orifice, such as a tapering orifice (shown in Figure 3) extending towards the respective cell degassing element 6.

In one embodiment, the cavity 3 is configured to communicate with the cell degassing elements 6 of battery cells arranged to one cell stack 20. In one embodiment, the cavity 3 is configured to communicate with the cell degassing elements 6 of battery cells arranged to at least two cell stacks 20. In one embodiment, the cavity 3 is configured to communicate with all the cell stacks 20 arranged in parallel.

In one embodiment, a connecting piece 18 that links the cell degassing element 6 to the respective opening 17 is arranged between the cell degassing element 6 and the respective opening 17. The connecting piece 18 creates a connecting channel 19 from the cell degassing element to the opening 17 and the cavity 3. In one embodiment, the connecting channel 19 is closed with a stopper structure 26, such as a film, a membrane or similar blocking structure 23 that closes the connecting channel but ruptures under certain pressure and allows gas flowing from the cell degassing element 6 to the cavity 3. The blocking structure may comprise a weakening structure that ruptures more easily that the rest of the blocking structure. The stopper structure 26 allows the internal pressure from the battery cell undergoing thermal runaway to be passed in the cavity 3 but preferably prohibits access of gas penetrating from the cavity 3 to another battery cell 1.

In the embodiment shown in Figure 1a, one connecting piece 18 extends over all the cell degassing elements 6 arranged in one cell stack 20. In another embodiment, the connecting piece 18 may cover cell degassing elements of two or even more cell stacks 20. In another embodiment, one connecting piece 18 covers just some of the cell degassing elements 6 arranged in one cell stack 20, i.e., there are more than one connecting piece per one cell stack 20.

In one embodiment, the shape of the proximal wall 4 follows the shape and outer dimensions of the first side 24 of the plurality of battery cells 1.

In one embodiment, the area of the proximal wall 4 is larger than the area of the first side 24 of the plurality of battery cells 1. In other words, the proximal wall 4 extends over or past the first side 24 on at least one of peripheral edge thereof. In the embodiment shown in Figures 1a, 1b, the proximal wall 4 extends over all four peripheral edges of the first side 24.

In one embodiment, the distal wall 5 is a part of an outer protective wall 11 of the battery pack assembly. In one embodiment, the outer protective wall 11 creates an airtight casing that envelopes the battery pack assembly/assemblies of the battery. In one embodiment, the distal wall 5 is a part of an outer protective wall of the vehicle battery 200.

In one embodiment, the distal wall 5 and the safety arrangement 2 - except the vent 9 - are arranged inside the outer protective walls of the battery pack assembly. In one embodiment, the distal wall 5 and the safety arrangement 2 - except the vent 9 - are arranged inside the outer protective walls of the vehicle battery.

The exit unit 7 communicates with the cavity 3 through a port 8 that is arranged in the cavity 3. In one embodiment, the port 8 is positioned in the proximal wall 4 at proximity of an edge 15 thereof and distally from the ends of said edge. In one embodiment, such as shown in Figure 1a, the port 8 is positioned at the middle of the edge 15, i.e., symmetrically in relation to said edge.

The exit unit 7 comprises a vent 9 that leads gas out from the safety arrangement 2. In one embodiment, the vent 9 comprises a membrane or similar weak structure, or a valve, that ruptures or opens at a certain pressure level.

In one embodiment, the exit unit 7 comprises a preventing structure 10 for ensuring that flames and particles are not exiting out through the vent 9.

The exit unit 7 is arranged on a second side 14 of the battery cells 1. The second side 14 is at least substantially orthogonally to the proximal wall 4 of the cavity.

In one embodiment, the proximal wall 4 is arranged in x-y plane and the second side 14 is arranged in y-z plane (as shown in Figures 1a, 1b) or in x-z plane. In one embodiment, the x axis direction is the front-rear direction of the vehicle, and the z axis direction is the up-down direction. In another embodiment, the y axis direction is the front-rear direction of the vehicle, and the z axis direction is the up-down direction.

In one embodiment, the exit unit 7 is a separate element or part that is attached to the second side 14 and connected to the port 8 by suitable means.

In one embodiment, the exit unit 7 is at least partly integrated with the second side 14 or the outer protective wall 11 or some other structure or part.

The preventing structure 10 provided in some embodiments in the exit unit 7 is constructed for arresting possible flames reaching that far. Such flames may appear especially in cases where the thermal runaway event takes place in a battery cell 1 that lies in proximity to the port 8.

The preventing structure 10 may comprise at least one of a labyrinth structure, a porous structure, a flap, a mesh and a grid/grating structure, for instance.

The cavity 3 has a low but broad and long shape having much surface area in relation to its volume. This shape is made for rapid and effective cooling of gases being released in a thermal runaway of a battery cell(s). The exit unit 7, instead, has preferably a shape that has much volume in relation to its surface area. This kind of shape is made for enveloping the preventing structure 10.

In one embodiment, the surface 28 of the distal wall (shown in Figure 3a) arranged towards the cavity is more even than the surface 27 of the proximal wall arranged towards the cavity. In one embodiment, subareas of the surface 28 of the distal wall above or close to the openings 17 are more even than the opposite part of the surface 27 of the proximal wall. This may create the Coand 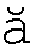 effect in surroundings of the openings.

The function of the safety arrangement 2 is based on cooperation of the cavity 3 and the exit unit 7. The hot gas stream including not only gaseous substances but also solid particles (ejecta particles) exiting from the cell degassing element 6 is first routed to the cavity 3. The gas stream hits with a high velocity to the walls of the cavity 3, especially to the proximal wall 4 and the distal wall 5. This creates turbulence and eventually a vortex inside the cavity 3. The gas stream begins then circulating in and spreading to the entire volume of the cavity 3. The heat of the gas is absorbed and spread by the surfaces of the cavity 3.

A substantial part, preferably at least most, of the ejecta particles are collected within the cavity 3. The ejecta particles tend to stay or remain in places where the gas flow slows down or changes its direction. This kind of places may be, e.g., one or more corners of the cavity. Thus, damaged to other cells caused by excessive heat and high temperature particles is prevented or at least substantially reduced.

The port 8 routes the gas stream out from the cavity 3. At this point the gas is substantially cooled down and a substantial amount of the ejecta particles is removed from the gas stream. Then the gas stream enters exit unit 7. The task of the exit unit 7 is to create distance between the port 8 and the vent 9, in other words to provide a lengthened path, to the gas stream so that flames and particles are prevented to exiting from the safety arrangement 2. The exit unit 7 may also add heat absorption and/or particle collection taking place in the safety arrangement 2. In one embodiment, the exit unit 7 just provides said lengthened path, without any preventing structure.

Pressure build up in the safety arrangement 2 opens the vent 9 and the gas exits. At this point, the temperature of the gas is lowered sufficiently for preventing self-ignition outside of the battery pack assembly 100. Furthermore, the gas is at least essentially devoid of ejecta particles.

**Figure 2a** is a schematic view of a detail of a battery pack assembly, and **Figure 2b** is a schematic view of another detail of a battery pack assembly.

In one embodiment, such as shown in the Figures, the port 8 has just one opening. In another embodiments, the port 8 comprises two or even more openings.

In one embodiment, the port 8 has an oblong shape at the cavity 3, such as a rectangular shape as shown in Figure 2a, or an oval shape.

In one embodiment, the port 8 is arranged in the proximal wall 4 and positioned such that the longitudinal direction of the oblong shape of the port 8 is aligned at least substantially with the nearest of the edges 15 of the proximal wall. One example of this embodiment is shown in Figure 1a.

In one embodiment, the port 8 is arranged in the side/end wall 16 of the cavity and distally from the ends of said side/end wall. In one embodiment, the port 8 is positioned at the middle of said side/end wall 16, i.e., symmetrically in relation to said side/end wall.

However, the shape of the port 8 at the cavity 3 is not necessarily oblong: for example it can be round or polygonal, such as square.

In one embodiment, the port 8 is directly connected to the exit unit 7. In another embodiment, between the port 8 and the exit unit 7 there is a flow channel (not shown) for supplying the gas stream from the port to the exit unit.

The port 8 is dimensioned so that the gas stream is first forced to spread and circulate inside the cavity 3. In one embodiment, the port 8 is dimensioned, i.e., its cross-sectional flow area is selected, in relation to the cross sectional area A of the cell degassing element 6, such as shown in Figure 2b. In one embodiment, the cross-sectional flow area of the port 8 is selected in range of 2 x A to 5 x A, i.e., the area of the port 8 is two times to five times the area A of the cell degassing element 6. In one embodiment, the cross-sectional flow area of the port 8 is selected in range of 2 x A to 4 x A. In one embodiment, the cross-sectional flow area of the port 8 is selected in range of 2 x A to 3 x A. It is to be noted that the shape of the cell degassing element 6 is just one example of possible shapes.

**Figure 3a** is a schematic side view of a third detail of a battery pack assembly in partial cross-section and **Figure 3b** illustrates a detail of Figure 3a. The cavity 3 is provided between the proximal wall 4 and the distal wall 5. In one embodiment, the height H of the cavity, i.e., the distance between the proximal wall 4 and the distal wall 5, is selected so that at least most of the cavity has a height in range of 10 mm at most, preferably 2 mm to 5 mm, more preferably 3 mm to 4 mm.

In one embodiment, the term "at least most" herein means 50 % or more of the area of the proximal wall 4.

In one embodiment, the cavity is devoid of any obstacles or structures affecting to flows of the gas stream therein. In one embodiment, the cavity is devoid of gas flow guides. In one embodiment, the cavity comprises one or more supports 22 attached to or integrated with the proximal and the distal walls 4, 5. The support 22 provides mechanical support and strength to the structure of the cavity.

In one embodiment, the cross-sectional flow area of the opening 17 is A1. In one embodiment, said flow area is equal with the flow area A of the of the cell degassing element 6. In one embodiment, said flow area A1 is greater than the flow area A of the of the cell degassing element 6. In one embodiment, the flow area A1 of the opening 17 is greater than and have a similar shape as the flow area A of the of the cell degassing element for providing tolerance that simplifies mounting the proximal wall 4 to the cell degassing elements 6 in assembling the battery pack assembly.

In one embodiment, the cross-sectional flow area A1 is dimensioned in relation to the height H of the cavity such that in an imaginary cylinder C (best shown in Figure 3b) that has a height equal with distance from the opening 17 to the distal wall 5 and a base that has the same shape and area A1 as the opening 17, the cylinder has a side surface having an area A2, the side surface area A2 is 1.4 x A1 or more.

In one embodiment, such as shown in Figure 3a, the opening 17 is arranged at an end of a projection 25 that is projecting away from the cavity 3. In this embodiment, the height of the side surface of the imaginary cylinder C is sum of the height H of the cavity and the height H1 of the projection.

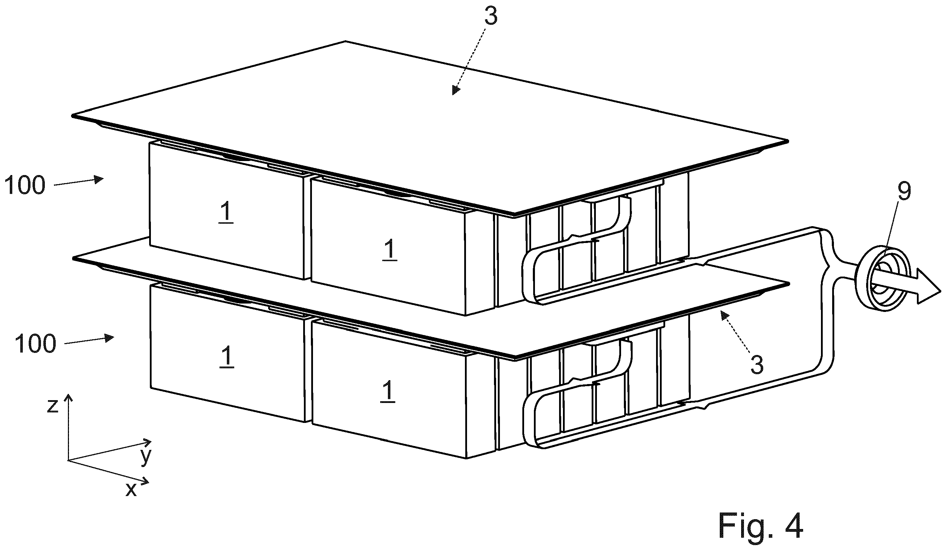

**Figure 4** is a schematic perspective view of another battery pack assembly.

As already mentioned, the battery pack assembly 100 is a part of a vehicle battery 200. In one embodiment, the vehicle battery 200 comprises at least two battery pack assemblies 100 arranged one on top of one another.

In one embodiment, the battery pack assemblies 100 arranged one on top of one another are arranged so that at least one cavity 3 lies between two battery cells 1 arranged one on top of one another. Figure 4 is showing one embodiment where the cavity 3 connected to the cell degassing elements 6 of the battery cells 1 in the lowest of the battery pack assemblies 100 is between the battery cells 1 arranged one on top of one another.

In another embodiment, the cavity 3 connected to the cell degassing elements 6 of the battery cells 1 in the lowest of the battery pack assemblies 100 is arranged under said battery pack assembly 100.

In another embodiment, the cavity 3 connected to the cell degassing elements 6 of the battery cells 1 in the uppermost of the battery pack assemblies 100 is arranged between the battery cells 1 arranged one on top of one another.

In another embodiment, the cavities 3 of both the uppermost and the lowest battery pack assemblies 100 are arranged between said assemblies. In one embodiment, said cavities have a common distal wall 5.

In still another embodiment, there is one cavity 3 arranged between the assemblies 100 and connected to the cell degassing elements 6 of both said assemblies 100. In other words, the cell degassing elements 6 of the lowest battery pack assembly 100 are arranged in the upper surface 12 of the battery cells 2 and connected to the cavity 3 through the proximal wall thereof, whereas the cell degassing elements 6 of the uppermost battery pack assembly 100 are arranged in the bottom surface of the battery cells 2 and connected to the cavity 3 through the distal wall.

In one embodiment, each of the cavities 3 is connected to the exit unit 7 of its own. For instance, the embodiment shown in Figure 4 would then comprise two exit units. In another embodiment, two or even more cavities 3 are connected to one and same exit unit 7 for receiving the gas flow from plurality of cavities. For instance, the embodiment shown in Figure 4 would then comprise just one exit unit. It is to be noted that for clarity reasons the exit unit is not shown in Figure 4, apart from the vent 9.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: battery cell
- 2: safety arrangement
- 3: cavity
- 4: proximal wall
- 5: distal wall
- 6: cell degassing element
- 7: exit unit
- 8: port
- 9: vent
- 10: preventing structure
- 11: outer protective wall
- 12: upper surface
- 13: bottom surface
- 14: second side
- 15: edge
- 16: side/end wall
- 17: opening
- 18: connecting piece
- 19: connecting channel
- 20: cell stack
- 21: battery terminal
- 22: support
- 23: blocking structure
- 24: 1^{st} side
- 25: projection
- 26: stopper structure
- 27: surface of proximal wall
- 28: surface of distal wall

- 100: battery pack assembly
- 200: vehicle battery

- A: flow area of cell degassing element
- A1: flow area of opening
- A2: surface area
- C: imaginary cylinder
- L: length of cavity
- H: height of cavity
- H1: height of projection
- W: width of cavity

## Claims

1. A battery pack assembly (100), comprising
- a plurality of battery cells (1), the battery cell (1) comprising a cell degassing element (6), wherein
- the cell degassing elements (6) of said plurality of battery cells being arranged on a same first side (24) thereof, and the battery pack assembly (100) further comprising
- a safety arrangement (2), comprising
- a cavity (3) arranged on said first side (24) of said plurality of battery cells and provided between a proximal wall (4) and a distal wall (5), wherein
-- the proximal wall (4) is arranged proximate to the plurality of battery cells (1), and
-- the distal wall (5) is arranged distal to the plurality of battery cells (1), wherein
-- the cavity (3) is configured to communicate with the cell degassing elements (6) through said proximal wall (4), wherein
- the safety arrangement (2) further comprises
- an exit unit (7) connected in fluid communication with the cavity (3) by a port (8), the exit unit (7) comprising
-- a vent (9) leading out from the safety arrangement (2), wherein
- the exit unit (7) is arranged on a second side (14) of the plurality of battery cells (1), said second side (14) being arranged at least substantially orthogonally to the proximal wall (4) of the cavity.

2. The assembly as claimed in claim 1, wherein
- the cross-sectional flow area of the cell degassing element is A, and
- the cross-sectional flow area of the port 8 is selected in range of 2 x A to 5 x A, preferably in range of 2 x A to 4 x A, more preferably in range of 2 x A to 3 x A.

3. The assembly as claimed in claim 1 or 2, wherein
- the port (8) has an oblong shape at the cavity (3), and
- the longitudinal direction of the oblong shape is preferably aligned at least substantially with said edge (15).

4. The assembly as claimed in any of the preceding claims, wherein
- the shape of the proximal wall (4) follows the outer dimension of the first side (24) of the plurality of battery cells (1).

5. The assembly as claimed in any of the preceding claims, wherein
- the area of the proximal wall (4) is larger than the area of the first side (24) of the plurality of battery cells (1) .

6. The assembly as claimed in any of the preceding claims, wherein
- the cross-sectional flow area of the opening (17) is A1,
- said cross-sectional flow area A1 being dimensioned in relation to the height (H) of the cavity such that
- an imaginary cylinder (C) arranged on the opening (17) and extending from said opening to the distal wall (5) has a base the area of which corresponds to the opening (17) and a side surface having an area A2, wherein A2 is larger than A1, preferably 1.3 x A1 or more.

7. The assembly as claimed in claim 6, wherein
- the opening (17) is arranged at an end of a projection (25) projecting away from the cavity (3), and
- the height of the side surface of the imaginary cylinder (C) is sum of the height (H) of the cavity and the height (H1) of the projection.

8. The assembly as claimed in any of the preceding claims, wherein
- the distal wall (5) is arranged between the plurality of battery cells (1) and an outer protective wall (11) of the battery pack assembly.

9. The assembly as claimed in any of the preceding claims, wherein
- the cell degassing elements (6) are arranged in an upper surface (12) of the plurality of battery cells (1) destined for arranging upwards, and
- the cavity (3) is arranged on said upper surface.

10. The assembly as claimed in any of claims 1 - 8, wherein
- the cell degassing elements (6) are arranged in a bottom surface (13) of the plurality of battery cells (1) destined for arranging downwards, and
- the cavity (3) is arranged under said bottom surface.

11. The assembly as claimed in any of the preceding claims, comprising
- a connecting piece (18) arranged between the cell degassing element (6) and the respective opening (17) to link said cell degassing element (6) to said opening (17), wherein the connecting piece (18) comprises a connecting channel (19), preferably provided with a stopper structure (26) allowing releasing the internal pressure from the battery cell undergoing thermal runaway to the cavity (3) but prohibiting access of gas from the cavity (3) to another battery cell.

12. The assembly as claimed in any of the preceding claims, wherein
- the surface (28) of the distal wall (5) arranged towards the cavity (3) is more even than the surface (27) of the proximal wall (4) arranged towards the cavity (3).

13. A vehicle battery (200), comprising the battery pack assembly (100) as claimed in any of the preceding claims.

14. The vehicle battery as claimed in claim 13, comprising
- at least two battery pack assemblies (100) arranged one on top of one another.

15. The vehicle battery as claimed in claim 14, wherein
- at least one cavity (3) is arranged between battery cells (1) arranged one on top of one another.
